# EUROPÄISCHE PATENTANMELDUNG

(11) **EP 1 130 878 A2**
(43) Veröffentlichungstag der Anmeldung: **05.09.2001**
(21) Anmeldenummer: 01103919.5
(22) Anmeldetag: 17.02.2001
(51) Int. Cl.: H04L 29/12, H04L 29/06

(54) **Verfahren zum Aufbau einer Telekommunikationsverbindung über ein Datennetz und Telekommunikationsendgerät**

(30) Priorität: 04.03.2000 DE 10010761
(71) Anmelder: Tenovis GmbH & Co. KG, 60362 Frankfurt am Main (DE)
(72) Erfinder: Nitsch, Guido, 41844 Wegberg (DE); Ritter, Gunter, 42287 Wuppertal (DE); Schröttle, Frank, 40670 Meerbusch-Osterrath (DE)
(74) Vertreter: Patentanwaltskanzlei WILHELM & BECK

(57) **Zusammenfassung**

Es wird ein Verfahren zum Aufbau einer Telekommunikationsverbindung (1, 35) über ein Datennetz (5) und ein Telekommunikationsendgerät (15) zur Durchführung des Verfahrens vorgeschlagen. Das Verfahren und das Telekommunikationsendgerät (15) dienen einer Verwendung einer herkömmlichen Tastatur eines Telekommunikationsendgerätes (15) für den Aufbau einer Telekommunikationsverbindung (1, 35) über ein Datennetz (5). Eine an einer Eingabeeinheit (10) eines an das Datennetz (5) angeschlossenen Telekommunikationsendgerätes (15) eingegebene folge aus Ziffern und Sonderzeichen wird in eine Adresse eines ersten Teilnehmers (20) des Datennetzes (5) umgewandelt. Anhand dieser Adresse wird eine erste Telekommunikationsverbindung vom Telekommunikationsendgerät (15) zum ersten Teilnehmer (20) über das Datennetz (5) aufgebaut.

## Beschreibung

### Stand der Technik

Die Erfindung geht von einem Verfahren zum Aufbau einer Telekommunikationsverbindung über ein Datennetz und von einem Telekommunikationsendgerät nach de Gattung der unabhängigen Ansprüche aus.

Verfahren zum Aufbau einer Telekommunikationsverbindung über ein Datennetz sind beispielsweise aus der Internet-Telefonie bekannt.

Ein Problem bleibt hierbei, herkömmliche Telefonanlagen direkt an das Datennetz anzubinden. In Datennetzen erfolgt die Teilnehmeradressierung nicht durch Rufnummern sondern mittels Rechneradressen, sog. IP-Adressen. Diese Adressen enthalten Trennzeichen und unterscheiden sich somit von den bekannten Telefonnummern. Diese Trennzeichen sind aber auf herkömmlichen Telefontastaturen nicht vorhanden.

### Kurzbeschreibung der Erfindung

Aufgabe der vorliegenden Erfindung ist es, ein Verfahren und ein Telekommunikationsendgerät anzugeben, mit dem sich auf einfache Weise eine Telekommunikationsverbindung über ein Datennetz aufbauen lässt.

Diese Aufgabe wird durch ein Verfahren nach Anspruch 1 und ein Telekommunikationsendgerät nach Anspruch 3 gelöst. Bevorzugte Ausgestaltungen sind in den abhängigen Ansprüchen angegeben.

### Vorteile der Erfindung

Das erfindungsgemäße Verfahren zum Aufbau einer Telekommunikationsverbindung über ein Datennetz und das erfindungsgemäße Telekommunikationsendgerät nach der Gattung der unabhängigen Ansprüche haben demgegenüber den Vorteil, dass eine an einer Eingabeeinheit eines an das Datennetz angeschlossenen Telekommunikationsendgerätes eingegebene Folge aus Ziffern und Sonderzeichen in eine Adresse eines ersten Teilnehmers des Datennetzes umgewandet wird und dass anhand dieser Adresse die erste Telekommunikationsverbindung vom Telekommunikationsendgerät zum ersten Teilnehmer über das Datennetz aufgebaut wird. Auf diese Weise lässt sich für die Eingabeeinheit eine herkömmliche Tastatur zur Eingabe von Ziffern und Sonderzeichen, beispielsweise eine numerische Zehnertastatur mit den zusätzlichen Sonderzeichen "*" und "#", verwenden. Findet die genannte Umwandlung und der Anschluss an das Datennetz außerhalb des Telekommunikationsendgerätes, beispielsweise in einem separaten Adapter statt, so kann auch ein herkömmliches Telekommunikationsendgerät ohne eigene Schnittstelle zum Anschluss an das Datennetz verwendet werden.

Aufgrund der Umwandlung der eingegebenen Folge aus Ziffern und Sonderzeichen in die Adresse des ersten Teilnehmers des Datennetzes müssen am Telekommunikationsendgerät keine zusätzlichen Eingabetasten für die in dieser Adresse benötigten Sonderzeichen vorgesehen werden, die sich nicht an einer herkömmlichen Tastatur eines Telekommunikationsendgerätes eingeben lassen. Ein erhöhter Platzbedarf für die Eingabeeinheit des Telekommunikationsendgerätes ist somit nicht erforderlich und die Übersichtlichkeit für den Benutzer bleibt gewahrt.

Durch die in den Unteransprüchen aufgeführten Maßnahmen sind vorteilhafte Weiterbildungen und Verbesserungen des Verfahrens zum Aufbau einer Telekommunikationsverbindung über ein Datennetz und des Telekommunikationsendgerätes gemäß den unabhängigen Ansprüchen möglich.

Besonders vorteilhaft ist es, dass eine der Folge aus Ziffern und Sonderzeichen über ein weiteres Sonderzeichen hinzugefügte Rufnummer eines zweiten Teilnehmers eines Telekommunikationsnetzes zum ersten Teilnehmer über das Datennetz übertragen wird und dass anhand dieser Rufnummer eine zweite Telekommunikationsverbindung vom ersten Teilnehmer zum zweiten Teilnehmer über das Telekommunikationsnetz aufgebaut wird, wobei der erste Teilnehmer auch an das Telekommunikationsnetz angeschlossen ist. Auf diese Weise lässt sich mittels einer herkömmlichen Eingabeeinheit oder Tastatur eines Telekommunikationsendgerätes auch ein Teilnehmer eines Telekommunikationsnetzes unter Vorschaltung eines Datennetzes anwählen, ohne dass die Eingabeeinheit erweitert und die Übersichtlichkeit für den Benutzer eingeschränkt werden müsste. Die Funktionalität der herkömmlichen Eingabeeinheit wird somit noch weiter erhöht.

Besonders vorteilhaft ist es, dass für die Eingabe der Folge aus Ziffern und Sonderzeichen für die Bildung der Adresse des Datennetzes nicht verschiedene, sondern ein oder mehrere gleiche Sonderzeichen verwendet werden können. Somit kann eines der bei einer herkömmlichen Tastatur bereits vorgesehenen Sonderzeichen, beispielsweise das "*"-Zeichen für dieses Sonderzeichen verwendet werden. Weitere Tasten mit Sonderzeichen müssen somit an der Eingabeeinheit nicht vorgesehen werden.

Ein weiterer Vorteil besteht auch darin, dass die Ziffernfolge für die Rufnummer des Teilnehmers des Telekommunikationsnetzes von der Folge aus Ziffern und Sonderzeichen für die Adresse des Datennetzes durch ein zweites vorgegebenes Sonderzeichen getrennt ist, ohne dass die Ziffernfolge der Rufnummer des Telekommunikationsnetzes ein erstes vorgegebenes oder überhaupt ein Sonderzeichen enthält. Auf diese Weise ist für die Unterscheidung der Rufnummer von der Adresse des Datennetzes lediglich ein weiteres Sonderzeichen erforderlich, das beispielsweise durch das "#"-Zeichen der herkömmlichen Tastatur realisiert werden kann, so dass über die in einer herkömmlichen Tastatur eines Telekommunikationsendgerätes sowieso schon vorhandenen Ziffern- und Sonderzeichentasten keine weiteren Sonderzeichentasten erforderlich sind.

### Zeichnungen

Die Erfindung wird anhand der Zeichnungen dargestellt und in der nachfolgenden Beschreibung näher erläutert. Es zeigen:
Fig. 1 ein Blockschaltbild einer ersten Ausführungsform eines erfindungsgemäßen Telekommunikationsendgerätes zum Aufbau einer Telekommunikationsverbindung über ein Datennetz und ggf. zusätzlich über ein Telekommunikationsnetz,
Fig. 2 ein Blockschaltbild einer zweiten Ausführungsform eines erfindungsgemäßen Telekommunikationsendgerätes, und
Fig. 3 ein Flussdiagramm zur Tastenverarbeitung bei dem in Fig. 2 gezeigten Telekommunikationsendgerät.

### Beschreibung des Ausführungsbeispiels

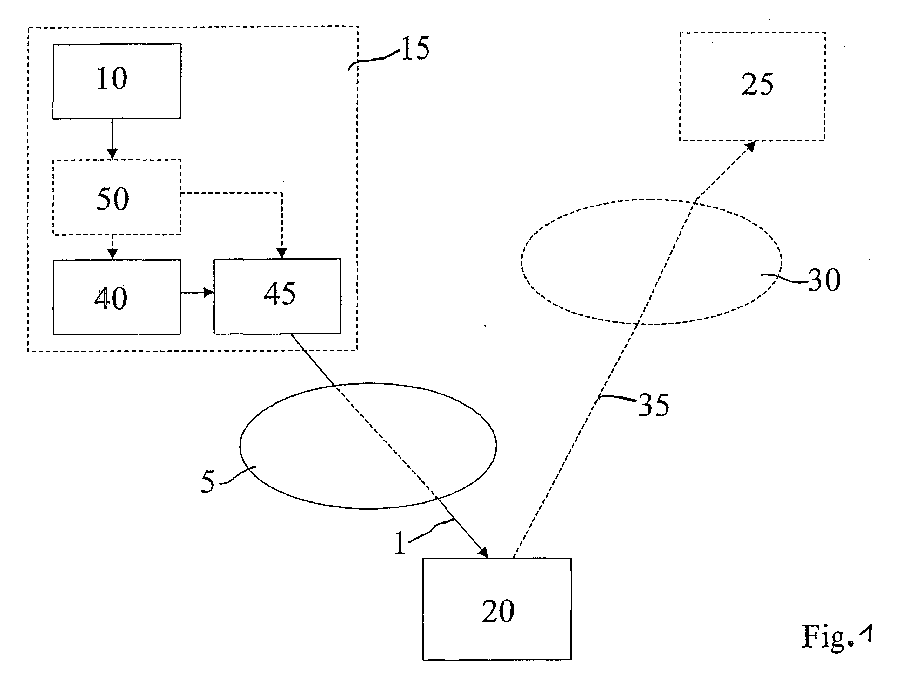

In der Figur 1 kennzeichnet 15 eine Telekommunikationsendgerät. Das Telekommunikationsendgerät 15 kann dabei als schnurgebundenes, als schnurloses oder als mobiles Telekommunikationsendgerät, beispielsweise nach dem GSM-Standard (Global System for Mobile Communications) oder nach dem UMTS-Standard (Universal Mobile Telecommunication System) ausgebildet sein. Das Telekommunikationsendgerät 15 umfasst eine Eingabeeinheit 10, die beispielsweise als herkömmliche numerische oder alphanumerische Zehnertastatur mit Eingabetasten für zwei verschiedene Sonderzeichen ausgebildet ist. Das erste Sonderzeichen soll dabei im folgenden beispielhaft das "*"-Sonderzeichen und das zweite Sonderzeichen soll im folgenden beispielhaft das "#"-Sonderzeichen sein. An die Eingabeeinheit 10 ist eine Detektionseinheit 50 angeschlossen, an die wiederum einerseits eine Umwandlungseinheit 40 und andererseits eine Anschlusseinheit 45 angeschlossen ist. Die Umwandlungseinheit 40 ist außerdem zusätzlich mit der Anschlusseinheit 45 verbunden.

In einer alternativen, hier nicht weiter beschriebenen Ausführungsform kann es auch vorgesehen sein, dass die Detektionseinheit 50, die Umwandlungseinheit 40 und die Anschlusseinheit 45 außerhalb des Telekommunikationsendgerätes 15 in einer separaten Adaptereinheit angeordnet sind. Das Telekommunikationsendgerät 15 könnte dann als herkömmliches Telekommunikationsendgerät 15 ausgebildet sein, das neben der beschriebenen Eingabeeinheit 10, die in einem solchen Telekommunikationsendgerät üblichen Baueinheiten aufweist, die in der Figur aus Gründen der Übersichtlichkeit nicht dargestellt sind.

Über die Anschlusseinheit 45 kann das Telekommunikationsendgerät 15 an ein Datennetz 5 angeschlossen werden, wie in der Figur dargestellt ist. Über das Datennetz 5 soll nun eine erste Telekommunikationsverbindung 1 zwischen dem Telekommunikationsendgerät 15 und einem ersten Teilnehmer 20 des Datennetzes 5 aufgebaut bzw. eingerichtet werden. Es soll im folgenden beispielhaft angenommen werden, dass für Telekommunikations- oder Datenverbindungen über das Datennetz 5 das Internetprotokoll (IP) verwendet wird, so dass es sich bei dem Datennetz 5 beispielsweise um das Internet handelt. Die Adresse des ersten Teilnehmers 20 als Teilnehmer des Datennetzes 5 ist dann eine IP-Adresse und hat das Format "XXX.XXX.XXX.XXX", wobei "XXX" zwischen 0 und 255 liegen kann. Die einzelnen Bestandteile der IP-Adresse sind jeweils durch einen Punkt getrennt. Ein solcher Punkt ist auf einer herkömmlichen Tastatur eines herkömmlichen Telekommunikationsendgerätes nicht vorhanden. Bei der für das Telekommunikationsendgerät 15 beschriebenen Eingabeeinheit 10 kann jedoch ersatzweise die Taste mit dem "*"-Sonderzeichen zur Eingabe verwendet werden. Für den hier beschriebenen ersten Anwendungsfall ist die Detektionseinheit 50 nicht erforderlich und daher in der Figur gestrichelt dargestellt. Für den hier beschriebenen ersten Anwendungsfall reicht es bereits aus, dass die Umwandlungseinheit 40 mit der Eingabeeinheit 10 und der Anschlusseinheit 45 verbunden ist. die Umwandlungseinheit 40 detektiert die eingegebenen "*"-Zeichen und wandelt sie in jeweils einen Punkt um. Die eingegebenen Ziffern für die IP-Adresse müssen nicht umgewandelt werden. Somit liegt nach der Umwandlung durch die Umwandlungseinheit 40 eine IP-Adresse vor, die an die Anschlusseinheit 45 weitergeleitet wird. Die Anschlusseinheit 45 baut mit Hilfe dieser IP-Adresse die erste Telekommunikationsverbindung 1 über das Datennetz 5 zum ersten Teilnehmer 20 auf.

Beispielhaft wird der Fall beischreiben, in dem die IP-Adresse des ersten Teilnehmers 20 folgendermaßen aufgebaut ist:
192.168.1.15

Der Benutzer des Telekommunikationsendgerätes 5 gibt an der Eingabeeinheit 10 für die Adresse des ersten Teilnehmers 20 im Datennetz 5 folgendes ein:
192*168*1*15

Die Umwandlungseinheit 40 wandelt diese Eingabe dann in die oben beschriebene IP-Adresse um, indem sie die "*"-Zeichen jeweils in einen Punkt umwandelt.

Gemäß einem zweiten Anwendungsfall soll nun die Verwendung der in der Figur gestrichelt dargestellten Detektionseinheit 50 vorgesehen sein. Bei diesem zweiten Anwendungsfall soll eine Gesamttelekommunikationsverbindung 1, 35 zwischen dem Telekommunikationsendgerät 15 und einem zweiten Teilnehmer 25 eines Telekommunikationsnetzes 30 aufgebaut bzw. eingerichtet werden. Da das Telekommunikationsendgerät 15 über die Anschlusseinheit 45 an das Datennetz 5 angeschlossen ist, muss für den Aufbau der Gesamttelekommunikationsverbindung 1, 35 zunächst ein sogenanntes Gateway als Verknüpfungspunkt zwischen dem Datennetz 5 und dem Telekommunikationsnetz 30 vom Telekommunikationsendgerät 15 angewählt werden, um den Übergang vom Datennetz 5 in das Telekommunikationsnetz 30 zu realisieren. Ein solches Gateway ist somit sowohl Teilnehmer des Datennetzes 5 als auch des Telekommuni kationsnetze s 30 und soll im folgenden durch den ersten Teilnehmer 20 gebildet sein. Beim Aufbau der ersten Telekommunikationsverbindung 1 vom Telekommunikationsendgerät 15 zum ersten Teilnehmer 20 wird dem ersten Teilnehmer 20 die Rufnummer des zweiten Teilnehmers 25 übermittelt. Anhand dieser Rufnummer kann der erste Teilnehmer 20 dann eine zweite Telekommunikationsverbindung 35 über das Telekommunikationsnetz 30 zum zweiten Teilnehmer 25 des Telekommunikationsnetzes 30 aufbauen. Die erste Telekommunikationsverbindung 1 und die zweite Telekommunikationsverbindung 35 bilden dann die Gesamttelekommunikationsverbindung 1, 35. Der Benutzer des Telekommunikationsendgerätes 15 muss in diesem Fall neben der IP-Adresse des ersten Teilnehmers 20 auch die Rufnummer des zweiten Teilnehmers 25 an der Eingabeeinheit 10 eingeben. Um die Rufnummer des zweiten Teilnehmers 25 und die IP-Adresse des ersten Teilnehmers 20 voneinander zu trennen, wird ein Trennungszeichen, beispielsweise das "/"-Zeichen verwendet. Ein solches Trennungszeichen ist in der Regel an der beschriebenen Eingabeeinheit mit Zehnertastatur und zwei Tasten für Sonderzeichen nicht vorhanden. Für das Trennungszeichen kann jedoch beispielsweise das für die IP-Adresse nicht benötigte "#"-Zeichen verwendet werden.

Die IP-Adresse und die Rufnummer werden also an der Eingabeeinheit 10 getrennt durch das "#"-Zeichen eingegeben. Die IP-Adresse wird dabei gemäß dem beschriebenen ersten Anwendungsfall eingegeben. Die Detektionseinheit 50 detektiert das "#"Zeichen und trennt die Eingabe vor dem "#"-Zeichen und die Eingabe nach dem "#"-Zeichen voneinander. Die Detektionseinheit 50 leitet dann diejenige der beiden Eingaben, bei der sie keine weiteren Sonderzeichen detektiert und die daher die Rufnummer darstellt, an die Anschlusseinheit 45 weiter. Die andere der beiden Eingaben, bei der die Detektionseinheit 50 die in diesem Beispiels als "*"-Zeichen ausgebildeten Sonderzeichen detektiert hat, wird von der Detektionseinheit 50 als IP-Adresse an die Umwandlungseinheit 40 weitergeleitet. Dort erfolgt die Umwandlung wie zu dem ersten Anwendungsfall beschreiben durch Umwandlung der "*"-Zeichen in jeweils einen Punkt. Die so umgewandelte IP-Adresse wird von der Umwandlungseinheit 40 an die Anschlusseinheit 45 weitergeleitet. Die Anschlusseinheit 45 setzt nun die von der Umwandlungseinheit 40 empfangene IP-Adresse und die von der Detektionseinheit 50 empfangene Rufnummer in einer vorgegebenen Reihenfolge getrennt durch das "/"-Zeichen zusammen und sendet sie an das Datennetz 5 zum Aufbau der ersten Telekommunikationsverbindung 1. Dabei wird vom Datennetz 5 anhand der durch das "/"-Zeichen abgetrennten IP-Adresse die erste Telekommunikationsverbindung 1 zum ersten Teilnehmer 20 aufgebaut. Die Rufnummer wird dabei zum ersten Teilnehmer 20 über das Datennetz 5 übertragen, wobei der erste Teilnehmer 20 anhand dieser Rufnummer die zweite Telekommunikationsverbindung 35 zum zweiten Teilnehmer 25 aufbaut, so dass die Gesamttelekommunikationsverbindung 1, 35 gebildet wird.

In einem zum zweiten Anwendungsfall alternativen dritten Anwendungsfall kann es auch vorgesehen sein, auf die Detektionseinheit 50 zu verzichten, wobei der Benutzer des Telekommunikationsendgerätes 15 dann die Rufnummer und die IP-Adresse bereits in der richtigen und vorgegebenen Reihenfolge an der Eingabeeinheit 10 eingeben muss. Die Umwandlungseinheit 40 ersetzt in diesem Fall die "*"-Zeichen in jeweils einen Punkt und das "#"-Zeichen in ein "/"-Zeichen. Die Reihenfolge von Rufnummer und IP-Adresse wird dabei von der Umwandlungseinheit 40 nicht verändert. Die Umwandlungseinheit 40 leitet dann die Rufnummer und die umgewandelte IP-Adresse getrennt durch das "/"-Zeichen an die Anschlusseinheit 45 in der beschriebenen Reihenfolge weiter. Die Anschlusseinheit 45 baut dann in der zum zweiten Anwendungsfall beschriebenen Weise die erste Telekommunikationsverbindung 1 auf und übersendet die Rufnummer an den ersten Teilnehmer 20, der anhand dieser Rufnummer die zweite Telekommunikationsverbindung 35 wie beschrieben zum zweiten Teilnehmer 25 über das Telekommunikationsnetz 30 aufbaut.

Als Beispiel soll angenommen werden, dass der zweite Teilnehmer 25 folgende Rufnummer aufweist:
021153540

Die IP-Adresse des ersten Teilnehmers 20 soll beispielsweise folgendermaßen lauten:
192.168.1.15

Der Benutzer des Telekommunikationsendgerätes 15 gibt dann an der Eingabeeinheit 10 folgendes ein, um die erste Telekommunikationsverbindung 1 und die zweite Telekommunikationsverbindung 35 zum zweiten Teilnehmer 25 aufzubauen:
021153540#192*168*1*15

Daraus ergibt sich dann nach Umwandlung durch die Umwandlungseinheit 40 und gegebenenfalls nach vorheriger Detektion durch die Detektionseinheit 50 in der Anschlusseinheit 45 folgende Zeichenfolge:
021153540/192.168.1.15

Gemäß dem zweiten Anwendungsfall wird dabei das "/"-Zeichen erst in der Anschlusseinheit 45 zur Trennung von detektierter Rufnummer und umgewandelter IP-Adresse eingefügt, während es bei dem zum zweiten Anwendungsfall alternativen dritten Anwendungsfall bereits in der Umwandlungseinheit 40 zusammen mit den Sonderzeichen in der IP-Adresse durch Umwandlung des "#"-Zeichens gebildet wird.

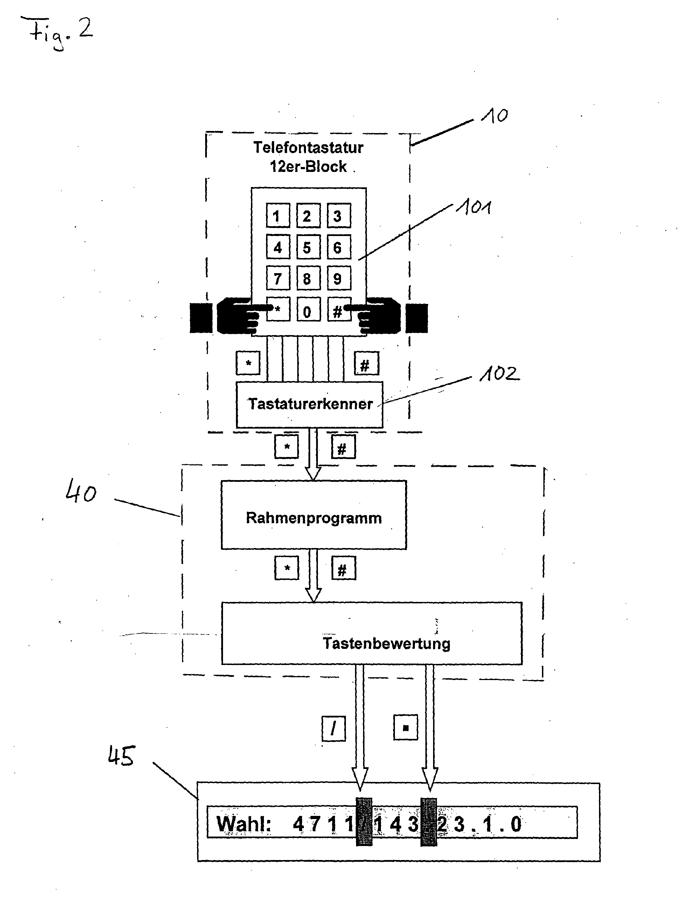

Fig. 2 zeigt eine weitere mögliche Ausführungsform eines Telekommunikationsendgerätes wie es sich insbesondere für den oben genannten dritten Anwendungsfall eignet. Dieses Telekommunikationsendgerät 15 umfasst eine Eingabeeinheit 10, die einen herkömmlichen Telefontastaturblock 101 mit 12 Tasten zur Eingabe der zehn Zahlen sowie der beiden Sonderzeichen "*" und "#" umfasst. Dieser Tastaturblock 101 ist an einen Tastenerkenner 102 angeschlossen, der feststellt, welche der Tasten betätigt ist. Das ermittelte Signal wird dann an die Umwandlungseinheit 40 abgeleitet, die im Rahmen eines Programmdurchlaufes eine Tastenbewertung vornimmt. Die Umwandlungseinheit 40 ist mit der Anschlusseinheit 45 verbunden, die wiederum an das Datennetz angeschlossen ist, um entsprechend der vom Umwandlungseinheit ermittelten Nummer die entsprechende Telekommunikations- und Datenverbindung herzustellen.

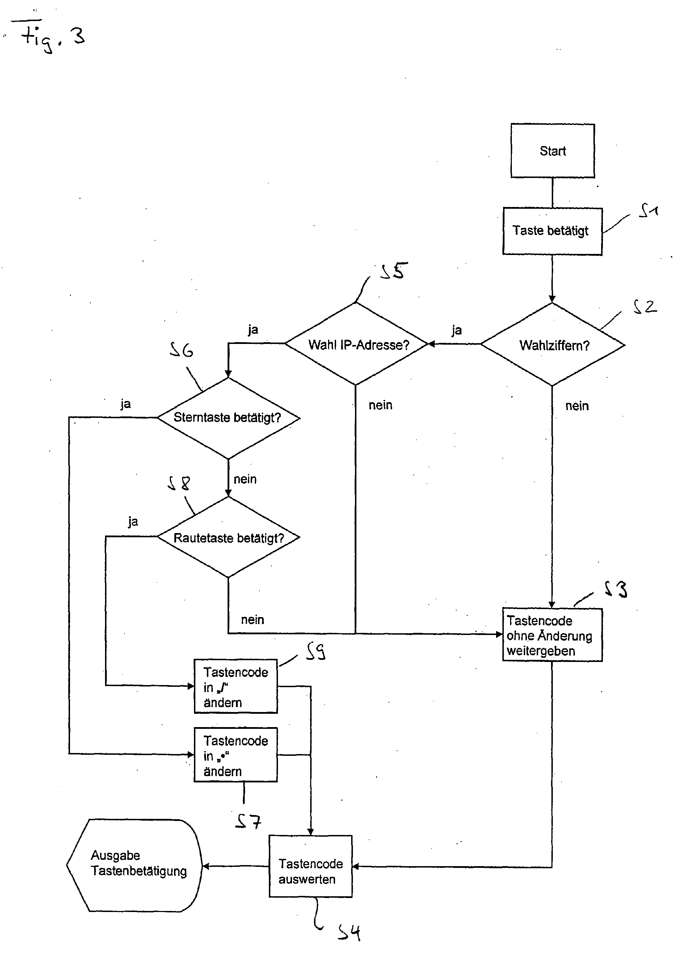

Fig. 3 zeigt ein Flussdiagramm der Tastenverarbeitung für einen Verbindungsaufbau aus einem Datennetz zu einem Teilnehmer im Telefonnetz. Hierbei muss sowohl die IP-Adresse eines Gateways, dass die Verbindung zum Telefonnetz herstellt, als auch die Rufnummer des Teilnehmers im Telefonnetz eingegeben werden können. Um die Rufnummer des Teilnehmers und die Adresse des Gateways voneinander zu trennen, wird ein Trennzeichen "/" verwendet. Dieses Trennzeichen ist auf dem Zwölfer-Block der herkömmlichen Telefontastatur 101 nicht vorhanden und wird deshalb durch die "#"-Taste ersetzt. Die IP-Adresse des Gatekeepers wiederum hat die Form "XXX.XXX.XXX.XXX", wobei "XXX" zwischen 0 und 255 liegen kann und die einzelnen Bestandteile der IP-Adresse durch einen Punkt getrennt sind. Dieser Punkt ist ebenfalls auf der herkömmlichen Tastatur 101 nicht vorhanden, so dass hier die "*"-Taste zur Eingabe verwendet wird.

Die Eingabe einer IP-Adresse und einer Rufnummer über das Telekommunikationsendgerät, wie es in Fig. 2 gezeigt ist, erfolgt üblicherweise folgendermaßen: Das Telekommunikationsendgerät befindet sich im Ruhezustand, wobei der Handapparat (nicht gezeigt) aufliegt. Die Ziffern der Rufnummer und der IP-Adresse werden dann über den dargestellten Tastenblock 101 eingegeben. Das Trennzeichen "/" zwischen den Ziffern der Rufnummern und der IP-Adresse wird durch die "#"-Taste eingegeben. Die Punkte als Trennzeichen zwischen den Ziffern der IP-Adresse werden über die "*"-Taste aktiviert.

Die Tastenverarbeitung erfolgt dabei wie in Fig. 3 gezeigt, so dass die Betätigung einer Taste der Telefontastatur 101 in Schritt S1 festgestellt wird, in Schritt S2 dann geprüft wird, ob eine Wahlziffer vorliegt. Falls keine Wahlziffer, d.h. keine Eingabe über den Zwölfer-Block der Telefontastatur 101 in Fig. 2 vorgenommen wird, sondern eine sonstige Funktionstaste zur Eingabe eines sonstigen Leistungsmerkmals gedrückt wird, wird der eingegebene Tastencode in Schritt S3 ohne Änderung weitergegeben, um dann in Schritt S4 ausgewertet zu werden, um dann das entsprechende Leistungsmerkmal auszuführen.

Wenn jedoch im Schritt S2 eine Wahlziffer festgestellt wird, wird im Schritt S5 geprüft, ob eine Rufnummer oder eine IP-Adresse eingegeben wird. Die Wahl einer IP-Adresse wird dann angenommen, wenn die Wahlziffer der "#"-Taste entspricht oder nach Eingabe einer solchen "#"-Taste erfolgt. Falls im Schritt S5 festgestellt wird, dass der empfangene Tastencode nicht einer IP-Adresse zugeordnet ist, wird der Tastencode mit Schritt S3 zur Tastencodeauswertung weitergeleitet, um dann die entsprechende Rufnummer zusammenzusetzen. Wenn im Schritt S4 festgestellt wird, dass es sich um die Wahl einer IP-Adresse handelt, wird im Schritt S6 geprüft, ob die "*"-Taste bestätigt ist. Falls dies zutrifft, wird im Schritt S7 der entsprechende Tastencode in einen Punkt abgeändert und an die Tastenauswertung S4 weitergegeben. Falls im Schritt S6 festgestellt wird, dass keine "*"-Taste eingegeben ist, wird im Schritt S8 geprüft, ob die "#"-Taste betätigt wird. Falls dies zutrifft, wird dann im Schritt S9 der "#"-Tastencode in den Tastencode für "/" abgeändert und anschließend an die Tastencodeauswertung weitergeleitet. Falls festgestellt wird, dass weder die "*"-Taste noch die "#"-Taste betätigt ist, wird der Tastencode ohne Änderung an die Tastencodeauswertung weitergegeben, um an die entsprechende Stelle in der IP-Adresse eingesetzt zu werden.

Der dargestellte Programmablauf zur Auswertung der Tastenbetätigung kann auch so abgewandelt werden, dass sich der oben genannte zweite Anwendungsfall ausführen lässt. Im Schritt S5 werden dann alle eingegebenen Wahlziffern zwischengespeichert und darauf überprüft, ob die "#"-Taste eingegeben wird. Die Wahlziffern vor der "#"-Taste und nach der "#"-Taste werden dann darauf überprüft, ob die "*"-Taste als weiteres Sonderzeichen vorkommt. Die Wahlziffernfolge mit diesem weiteren Sonderzeichen wird dann als IP-Adresse behandelt, wobei der Tastencode für die "*"-Taste in den Tastencode für einen Punkt mit Hilfe der Schrittfolge S6 S7 umgesetzt wird. Der Tastencode für das Trennzeichen "/" kann dann automatisch in Schritt S4 bei der Tastenauswertung zwischen den Wahlziffern der IP-Adresse und der Rufnummer eingesetzt werden. Es kann jedoch auch hier eine Umwandlung der "#"-Taste entsprechend der Schrittfolge S8, S9 erfolgen.

Die in der vorangegangenen Beschreibung, den Ansprüchen und Zeichnungen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Aufbau einer Telekommunikationsverbindung (1, 35) über ein Datennetz (5),
**dadurch gekennzeichnet,**
dass eine an einer Eingabeeinheit (10) eines an das Datennetz (5) angeschlossenen Telekommunikationsendgerätes (15) eingegebene Folge aus Ziffern und Sonderzeichen in eine Adresse eines ersten Teilnehmers (20) des Datennetzes (5) umgewandelt wird und dass anhand dieser Adresse die erste Telekommunikationsverbindung (1) vom Telekommunikationsendgeräfc (15) zum ersten Teilnehmer (20) über das Datennetz (5) aufgebaut wird.

2. Verfahren nach Anspruch 1, **dadurch gekennzeichnet**, dass eine der Folge aus Ziffern und Sonderzeichen über ein weiteres Sonderzeichen über ein weiteres Sonderzeichen hinzugefügte Rufnummer eines zweiten Teilnehmers (25) eines Telekommunikationsnetzes (30) zum ersten Teilnehmer (20) über das Datennetz (5) übertragen wird und dass anhand dieser Rufnummer eine zweite Telekommunikationsverbindung (35) vom ersten Teilnehmer (20) zum zweiten Teilnehmer (25) über das Telekommunikationsnetz (30) aufgebaut wird, wobei der erste Teilnehmer (20) auch an das Telekommunikationsnetz (30) angeschlossen ist.

3. Telekommunikationsendgerät (15) zur Durchführung eines Verfahrens nach Anspruch 1 oder 2,
**dadurch gekennzeichnet,**
dass eine Eingabeeinheit (10) zur Eingabe von Ziffern und Sonderzeichen vorgesehen ist, dass eine Umwandlungseinheit (40) zur Umwandlung einer an der Eingabeeinheit (10) eingegebenen Folge aus Ziffern und Sonderzeichen in eine Adresse eines ersten Teilnehmers (20) eines Datennetzes (5) vorgesehen ist und dass eine Anschlusseinheit (45) zum Anschluss des Telekommunikationsendgerätes (15) an das Datennetz (5) und zum Aufbau einer ersten Telekommunikationsverbindung (1) über das Datennetz (5) zum ersten Teilnehmer (20) anhand der von der Umwandlungseinheit (40) gebildeten Adresse vorgesehen ist.

4. Telekommunikationsendgerät (15) nach Anspruch 3, **dadurch gekennzeichnet**, dass eine Detektionseinheit (50) zur Detektion einer der Folge aus Ziffern und Sonderzeichen über ein weiteres Sonderzeichen hinzugefügten Rufnummer eines zweiten Teilnehmers (25) eines Telekommunikationsnetzes (30) vorgesehen ist und dass die Anschlusseinheit (45) die von der Detektionseinheit (50) detektierte Rufnummer beim Aufbau der ersten Telekommunikationsverbindung (1) zum ersten Teilnehmer (20 überträgt, damit dieser als Teilnehmer des Telekommunikationsnetzes (30) anhand der Rufnummer eine zweite Telekommunikationsverbindung (35) über das Telekommunikationsnetz (30) zum zweiten Teilnehmer (25) aufbaut.

5. Telekommunikationsendgerät (15) nach Anspruch 3 oder 4, **dadurch gekennzeichnet**, dass die Umwandlungseinheit (40) eine Folge aus an der Eingabeeinheit (10 eingegebenen Ziffern und Sonderzeichen mit bis zu dreistellige Ziffernfolgen jeweils getrennt durch genau ein erstes vorgegebenes Sonderzeichen umwandelt.

6. Telekommunikationsendgerät (15) nach Anspruch 5, **dadurch gekennzeichnet**, dass die Umwandlungseinheit (40) die Ziffernfolgen bei der Umwandlung unverändert belässt und das erste vorgegebene Sonderzeichen zwischen zwei Ziffernfolge in einen Punkt umwandelt.

7. Telekommunikationsendgerät (15) nach Anspruch 4 oder nach Anspruch 5 oder 6, soweit die beiden letzteren auf Anspruch 4 rückbezogen sind, **dadurch gekennzeichnet**, dass die Detektionseinheit (50) eine Ziffernfolge als Rufnummer detektiert, wenn diese Ziffernfolge von der Folge aus Ziffern und Sonderzeichen durch ein zweites vorgegebenes Sonderzeichen getrennt ist, ohne ein erstes vorgegebenes Sonderzeichen zu enthalten.
